# EUROPEAN PATENT SPECIFICATION

(11) **EP 1 028 554 B1**
(45) Date of publication and mention of the grant of the patent: **27.06.2007**
(21) Application number: 00102198.9
(22) Date of filing: 09.02.2000
(51) Int. Cl.: H04J 14/02

(54) **Optical transmission system and method**
Vorrichtung und Verfahren zur optischen Übertragung
Système et procédé de transmission optique

(30) Priority: 09.02.1999 JP 3162899
(43) Date of publication of application: 16.08.2000
(73) Proprietor: NEC CORPORATION, Tokyo (JP)
(72) Inventor: Tajima, Tsutomu, Minato-ku, Tokyo (JP); Watanabe, Nobutaka, Minato-ku, Tokyo (JP)
(74) Representative: Vossius & Partner

(56) References cited:
- EP-A- 0 877 502
- US-A- 5 739 932

## Description

The present invention relates to an optical transmission system and an optical transmission method for transmitting optical signal with high speed.

An optical signal of 2.4 Gbps is used for optical transmission of a lot of conventional large capacity of optical transmission system. However, it is necessary to extend further transmission capacity hereafter. For that reason, an optical transmission system with large capacity according to an optical transmission equipment and a wavelength division multiplexing optical transmission equipment using optical signal of 10 Gbps is in the process of making practicable. Delivery of an optical signal is implemented between an optical transmission equipment and a wavelength division multiplexing optical transmission equipment. Conventional optical transmission equipment and wavelength division multiplexing optical transmission equipment implement delivery of the optical signal with high speed. Namely, an optical transmission system uses an optical signal of 2.4 Gbps. The optical transmission equipment in the optical transmission system transmits an optical signal of 2.4 Gbps to the wavelength division multiplexing optical transmission equipment. Further, an optical transmission system uses an optical signal of 10 Gbps. The optical transmission equipment in the optical transmission system transmits an optical signal of 10 Gbps to the wavelength division multiplexing optical transmission equipment. Namely, in the conventional large capacity optical transmission system, the optical transmission system has the constitution that the optical transmission /reception circuit with ultra high speed is connected continuously. In the conventional optical transmission system, the ultra high speed just as it stands is transmitted from the optical transmission equipment to the wavelength division multiplexing optical transmission equipment.

EP 0 877 502 relates to a transmitting apparatus and receiving apparatus for wavelength-division-multiplex signal transmission with at least one auxiliary transponder for increasing reliability in the event of failure of a transponder.

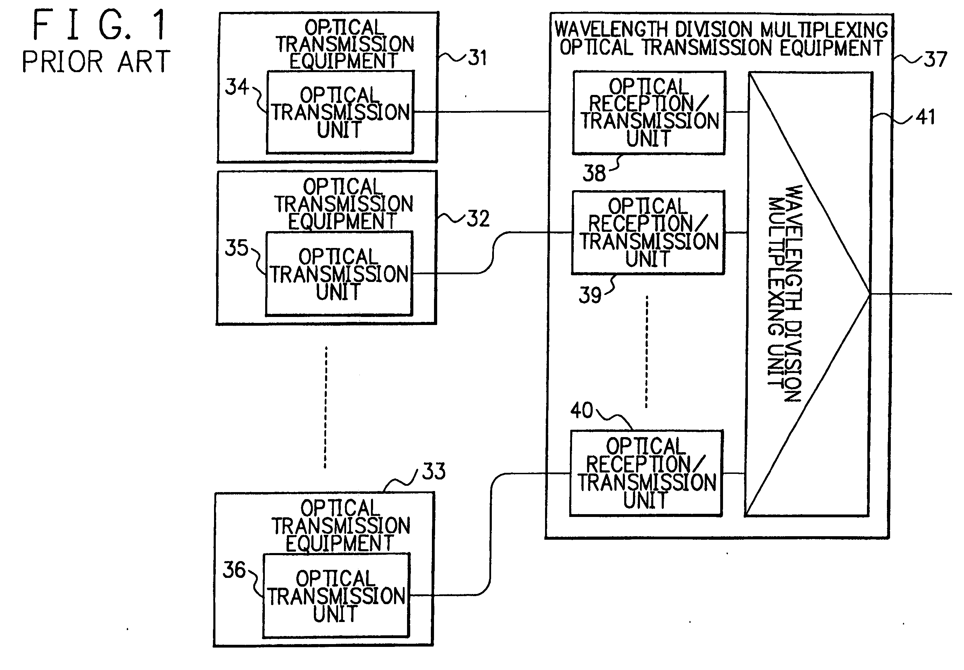

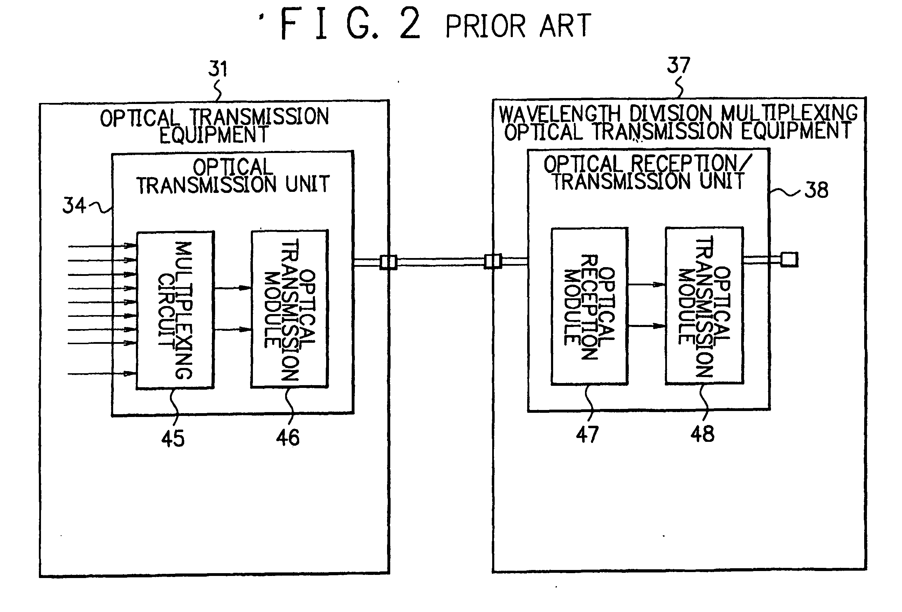

Fig. 1 is a view showing one example of conventional large capacity of an optical transmission system. Further, Fig. 2 shows a configuration corresponding to one wave of the optical transmission system. As shown in Fig. 1, the optical transmission system includes the optical transmission equipments 31, 32, and 33. Also the optical transmission system includes the wavelength division multiplexing optical transmission equipment 37. Respective optical transmission equipments 31, 32, and 33 include optical transmission units 34, 35, and 36. The wavelength division multiplexing optical transmission equipment 37 includes the optical reception / transmission units 38, 39, and 40. Also the wavelength division multiplexing optical transmission equipment 37 includes a wavelength division multiplexing unit 41. As shown in Fig. 2, the optical transmission unit 34 includes a multiplexing circuit 45 and an optical transmission module 46. The optical transmission unit 35 has the same constitution as that of the optical transmission unit 34. Also, the optical transmission unit 36 has the same constitution as that of the optical transmission unit 34. The optical reception / transmission unit 38 includes an optical reception module 47 and an optical transmission module 48. The optical reception / transmission unit 39 has the same constitution as that of the optical reception / transmission unit 38. Also the optical reception /transmission unit 40 has the same constitution as that of the optical reception / transmission unit 38.

As shown in Fig. 1, the optical transmission units 34, 35, and 36 transmit optical signal. The respective optical signals transmitted from the optical transmission units 34, 35, and 36 are inputted to the optical reception / transmission units 38, 39, and 40 of the wavelength division multiplexing optical transmission equipment 37. The optical reception /transmission units 38, 39, and 40 input therein the optical signal to convert it to electric signal once. Thereafter, the optical reception /transmission units 38, 39, and 40 generate optical signal with appropriate wavelength to wavelength division multiplexing. The optical reception /transmission units 38, 39, and 40 output optical signals whose wavelengths are different from each other. The wavelength division multiplexing unit 41 multiplexes the optical signals from the optical reception / transmission units 38, 39, and 40.

However, in the conventional optical transmission system, the optical transmission system has the constitution that the optical transmission / reception circuit with ultra high speed is connected continuously. In the conventional optical transmission system, the ultra high speed just as it stands is transmitted from the optical transmission equipment to the wavelength division multiplexing optical transmission equipment. Therefore, the conventional optical transmission system is large scale. Also the conventional optical transmission system takes high power consumption. Further, a price thereof is high. There are problems above-described concerning the conventional optical transmission system.

In view of the foregoing it is an object of the present invention, in order to overcome the above described problems to provide an optical transmission system and an optical transmission method in which the optical transmission system and the optical transmission method are miniaturized, whose power consumption is reduced, and whose price is low.

It is another object of the present invention to provide an optical transmission system and an optical transmission method which are capable of improving transmission quality of the optical signal.

The objects of the invention are achieved with the features of the claims.

According to a first aspect of the present invention, in order to achieve the above-mentioned objects, there is provided an optical transmission system which comprises a plurality of optical transmission equipments each having parallel optical transmission unit for transmitting a plurality of low speed optical signals in parallel, and a wavelength division multiplexing optical transmission equipment consisting of a plurality of parallel optical reception / transmission units connected to the parallel optical transmission unit and a wavelength division multiplexing unit connected to these parallel optical reception / transmission units, wherein the respective parallel optical reception / transmission units include a parallel optical reception module which receives a plurality of optical signals from the respective parallel optical transmission units in parallel to convert them into reception electric signals, a multiplexing circuit multiplexes the reception electric signal from the parallel optical reception module, before generating multiplexed electric signal whose speed is higher than these reception electric signals, and a high speed optical transmission module converts the multiplexed electric signal from the multiplexing circuit into a multiplexed optical signal to transmit.

According to a second aspect of the present invention, there is provided an optical transmission system which comprises an optical transmission unit which has eight parallel optical transmission modules for transmitting eight optical signals of 1.25 Gbps in parallel and a wavelength division multiplexing optical transmission equipment consisting of eight parallel optical reception / transmission units connected to the parallel optical transmission modules and a wavelength division multiplexing optical transmission equipment connected to these optical reception / transmission units, wherein the respective parallel optical reception / transmission units include a parallel optical reception module which receives eight optical signals from the respective parallel optical transmission modules in parallel to convert them into reception electric signals, a multiplexing circuit multiplexes the reception electric signal from the parallel optical reception module, before generating multiplexed electric signal of 10 Gbps; and a high speed optical transmission module converts the multiplexed electric signal from the multiplexing circuit into a multiplexed optical signal to transmit.

According to a third aspect of the present invention, there is provided an optical transmission system which comprises a plurality of optical transmission equipments each having parallel optical transmission unit for transmitting a plurality of low speed optical signals in parallel a wavelength division multiplexing optical transmission equipment consisting of a plurality of parallel optical reception / transmission units connected to the parallel optical transmission unit and a wavelength division multiplexing unit connected to these parallel optical reception / transmission units, and an amplifier which receives a multiplexed optical signal from the wavelength division multiplexing optical transmission equipment to amplify, wherein the respective parallel optical reception / transmission units include a parallel optical reception module which receives a plurality of optical signals from the respective parallel optical transmission units in parallel to convert them into reception electric signals, a multiplexing circuit multiplexes the reception electric signal from the parallel optical reception module, before generating multiplexed electric signal whose speed is higher than these reception electric signals, and a high speed optical transmission module converts the multiplexed electric signal from teh multiplexing circuit into a multiplexed optical signal to transmit.

According to a fourth aspect of the present invention, there is provided an optical transmission system which comprises an optical transmission unit which has eight parallel optical transmission modules for transmitting eight optical signals of 1.25 Gbps in parallel, a wavelength division multiplexing optical transmission equipment consisting of eight parallel optical reception / transmission connected to the parallel optical transmission modules and a wavelength division multiplexing optical transmission equipment connected to these optical reception / transmission units, and an amplifier which receives a multiplexed optical signal from the wavelength division multiplexing optical transmission equipment to amplify, wherein the respective parallel optical reception / transmission units include a parallel optical reception module which receives eight optical signals from the respective parallel optical transmission modules in parallel to convert them into reception electric signals, a multiplexing circuit multiplexes the reception electric signal from the parallel optical reception module, before generating multiplexed electric signal of 10 Gbps, and a high speed optical transmission module converts the multiplexed electric signal from the multiplexing circuit into a multiplexed optical signal to transmit.

According to a fifth aspect of the present invention, there is provided an optical transmission method in which an optical transmission system includes a plurality of optical transmission equipments, each having parallel optical transmission unit for transmitting a plurality of low speed optical signals in parallel, and a wavelength division multiplexing optical transmission equipment consisting of a plurality of parallel optical reception/transmission units each connected to the parallel optical transmission unit and a wavelength division multiplexing unit connected to these parallel optical reception /transmission units, operation of the respective parallel optical reception /transmission units comprising the steps of a parallel optical reception step receiving a plurality of optical signals from the respective parallel optical transmission units by a parallel optical reception module to convert them into reception electric signals, a multiplexing step for multiplexing the reception electric signals from the parallel optical reception module, before generating multiplexed electric signals whose speed is higher than these reception electric signals by a multiplexing circuit, and a high speed optical transmission step for converting the multiplexed electric signal from the multiplexing circuit into a multiplexed optical signal to transmit by a high speed optical transmission module.

According to a sixth aspect of the present invention, there is provided an optical transmission method in which an optical transmission system includes a plurality of optical transmission equipments each having parallel optical transmission units for transmitting a plurality of low speed optical signals in parallel, a wavelength division multiplexing optical transmission equipment consisting of a plurality of parallel optical reception / transmission units each connected to the parallel optical transmission module and a wavelength division multiplexing unit connected to these parallel optical reception / transmission units, and an amplifier receiving multiplexed optical signal from the wavelength division multiplexing optical transmission equipment to amplify, operation of the respective parallel optical reception / transmission units comprising the steps of a parallel optical reception step receiving a plurality of optical signals from the respective parallel optical transmission units by a parallel optical reception module to convert them reception electric signals, a multiplexing step for multiplexing the reception electric signals from the parallel optical reception module, before generating multiplexed electric signals whose speed is higher than these reception electric signals by a multiplexing circuit, and a high speed optical transmission step for converting the multiplexed electric signal from the multiplexing circuit into a multiplexed optical signal to transmit by a high speed optical transmission module.

The above and further objects and novel features of the invention will be more fully understood from the following detailed description when the same is read in connection with the accompanying drawings. It should be expressly understood, however, that the drawings are for purpose of illustration only and are not intended as a definition of the limits of the invention.
Fig. 1 is a block diagram showing a conventional optical transmission system;
Fig. 2 is a block diagram showing a part of the conventional optical transmission system in detail of Fig. 1;
Fig. 3 is a block diagram showing an optical transmission system of one embodiment according to the present invention; and
Fig. 4 is a block diagram showing a part of the optical transmission system in detail of Fig. 3.

A preferred embodiment of the present invention will now be described in detail in accordance with the accompanying drawings.

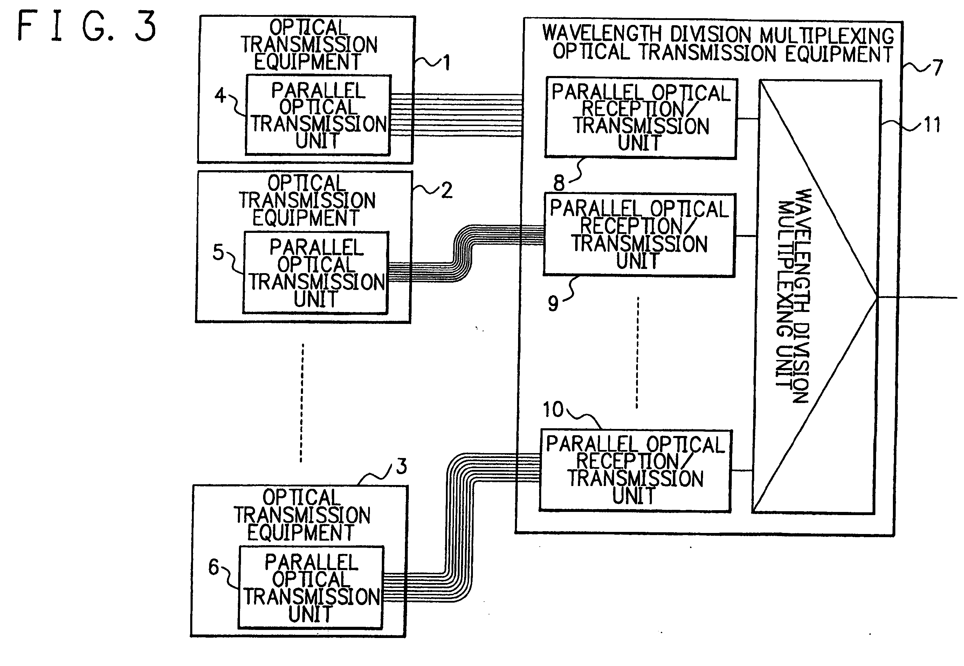

Fig. 3 is a block diagram showing an optical transmission system of one embodiment according to the present invention. As shown in Fig. 3, the optical transmission system as one embodiment of the present invention includes optical transmission equipments 1, 2, and 3 and a wavelength division multiplexing optical transmission equipment 7. The respective optical transmission equipments 1, 2, and 3 include parallel optical transmission units 4, 5, and 6. The wavelength division multiplexing optical transmission equipment 7 includes parallel optical reception / transmission units 8, 9, and 10 and wavelength division multiplexing unit 11. The parallel optical reception / transmission unit 8 is connected to the parallel optical transmission unit 4. The parallel optical reception / transmission unit 9 is connected to the parallel optical transmission unit 5. The parallel optical reception / transmission unit 10 is connected to the parallel optical transmission unit 6. The wavelength division multiplexing unit 11 is connected to the parallel optical reception / transmission equipments 8, 9, and 10.

The respective parallel optical transmission units 4, 5, and 6 transmit a plurality of optical signals in parallel. The respective parallel optical reception / transmission units 8, 9, and 10 receive the plurality of optical signals in parallel from the parallel optical transmission units 4, 5, and 6. The parallel optical reception / transmission units 8, 9, and 10 convert the plurality of optical signal into reception electric signal. The parallel optical reception / transmission units 8, 9, and 10 multiplex these reception electric signals. The parallel optical reception / transmission units 8, 9, and 10 generate multiplexed electric signal whose speed is more higher than these reception electric signals. The multiplexed electric signal is converted into an optical signal. The wavelength division multiplexing unit 11 multiplexes the optical signals from the parallel optical reception / transmission units 8, 9, and 10, thus generating multiplexed optical signals to transmit to transmission line. Furthermore, it is suitable to arrange an amplifier which receives multiplexed optical signal of the wavelength division multiplexing unit 11 to amplify, before transmitting it to the transmission line.

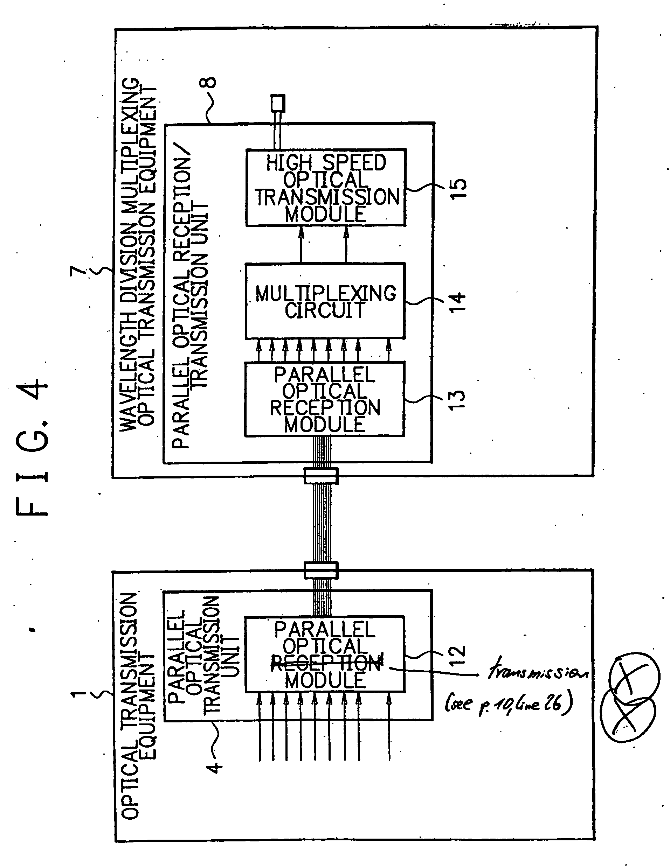

Fig. 4 shows a constitution of the optical transmission system corresponding to one wave of the optical signal of Fig. 3. As shown in Fig. 4, the parallel optical transmission unit 4 includes a parallel optical transmission module 12 which transmits a plurality of optical signals in parallel. The parallel optical transmission unit 5 has the same constitution as that of the parallel optical transmission unit 4. Also the parallel optical transmission unit 6 has the same constitution of the parallel optical transmission unit 4. The parallel optical reception /transmission unit 8 consists of a parallel optical reception module 13, a multiplexing circuit 14 and a high speed optical transmission module 15. The parallel optical reception module 13 is connected to the parallel optical transmission unit 4. The multiplexing circuit 14 is connected to the parallel optical reception module 13. The high speed optical transmission module 15 is connected to the multiplexing circuit 14. Further, an output terminal of the high speed optical transmission module 15 is connected to the wavelength division multiplexing unit 11. The parallel optical reception module 13 receives a plurality of optical signals from the parallel optical transmission module 12 to convert it into reception electric signal. The multiplexing circuit 14 multiplexes the reception electric signal from the parallel optical reception module 13, before generating a multiplexed electric signal whose speed is higher than these reception electric signals. The high speed optical transmission module 15 converts the multiplexed electric signal from the multiplexing circuit 14 to a multiplexed optical signal. A parallel optical reception /transmission unit 9 has the same constitution as that of the parallel optical reception / transmission unit 8. Also a parallel optical reception /transmission unit 10 has the same constitution as that of the parallel optical reception / transmission unit 8.

Next, there will be described a concrete example of the optical transmission system of the present invention. For instance, the optical transmission system of the present invention includes an optical transmission equipment 1 and a wavelength division multiplexing optical transmission equipment 7. The optical transmission equipment 1 has eight parallel optical transmission modules 12 for transmitting respective eight optical signals of 1.25 Gbps in parallel. The wavelength division multiplexing optical transmission equipment 7 consists of eight parallel optical reception / transmission units connected to the parallel optical transmission module 12, and a wavelength division multiplexing unit 11 connected to these eight parallel optical reception / transmission units. The parallel optical reception / transmission unit includes the parallel optical reception module 13 which receives eight optical signals from respective parallel optical transmission modules 12 in parallel to convert them into reception electric signals. The parallel optical reception /transmission unit includes the multiplexing circuit 14 which multiplexes the reception electric signal from the parallel optical reception module 13 to generate a multiplexed electric signal of 10 Gbps. The parallel optical reception / transmission unit includes the high speed optical transmission module 15 which converts the multiplexed electric signal from the multiplexing circuit 14 into the multiplexed optical signal to transmit. Furthermore, the optical transmission system of the present invention is applied to the case in which there is provided an optical transmission equipment which has eight parallel optical transmission module 12 for transmitting a plurality of optical signals of four signals or sixteen signals in parallel respectively.

As described above, according to the present invention, the optical transmission between the optical transmission equipment and the wavelength division multiplexing optical transmission equipment is taken to be low speed parallel optical transmission. Therefore, it is not necessary to prepare a high speed optical transmission / reception circuit. It is capable of realizing miniaturized optical transmission system. The optical transmission system consumes low power consumption. It is capable of realizing the optical transmission with low price.

Furthermore, according to the present invention, the optical transmission between the optical transmission equipment and the wavelength division multiplexing optical transmission equipment is taken to be low speed parallel optical transmission. It is capable of improving transmission quality of the optical signal.

## Claims

1. An optical transmission system comprising:
a plurality of optical transmission equipments (1, 2, 3) each having a parallel optical transmitter unit (4, 5, 6) for transmitting a plurality of low speed optical signals in parallel; and
a wavelength division multiplexing optical transmission equipment (7) consisting of a plurality of parallel optical receiver /transmitter units (8, 9, 10) each connected to said parallel optical transmitter unit and a wavelength division multiplexing unit (11) connected to these parallel optical receiver / transmitter units (8, 9, 10),
wherein said respective parallel optical receiver / transmitter units (8, 9, 10) include a parallel optical reception module (13) which receives a plurality of optical signals from said respective parallel optical transmitter units (4, 5, 6) in parallel to convert them into reception electric signals; a multiplexing circuit (14) multiplexes said reception electric signal from said parallel optical reception module, before generating multiplexed electric signal whose speed is higher than these reception electric signals; and a high speed optical transmission module (15) converts said multiplexed electric signal from said multiplexing circuit (14) into a multiplexed optical signal to transmit.

2. The optical transmission system according to claim 1, wherein
the parallel optical transmitter unit (4, 5, 6) of an optical transmission equipment (1) has eight parallel optical transmission modules (12) for transmitting eight optical signals of 1.25 Gbps in parallel and
the wavelength division multiplexing optical transmission equipment (7) consisting of eight parallel optical receiver / transmitter units (8) connected to said parallel optical transmission modules (12)
wherein said respective parallel optical receiver / transmitter units (8, 9, 10) include the parallel optical reception module (13) which receives eight optical signals from said respective parallel optical transmission modules (12) in parallel to convert them into reception electric signals; the multiplexing circuit (14) multiplexes said reception electric signal from said parallel optical reception module (12), before generating multiplexed electric signal of 10 Gbps; and the high speed optical transmission module (15) converts said multiplexed electric signal from said multiplexing circuit into a multiplexed optical signal to transmit.

3. The optical transmission system of claim 1 or 2, further comprising:
an amplifier which receives a multiplexed optical signal from said wavelength division multiplexing optical transmission equipment to amplify.

4. An optical transmission method in which an optical transmission system includes a plurality of optical transmission equipments (1, 2, 3) each having a parallel optical transmitter unit (4, 5, 6) for transmitting a plurality of low speed optical signals in parallel and a wavelength division multiplexing optical transmission equipment (7) consisting of a plurality of parallel optical receiver / transmitter units (8, 9, 10) each connected to said parallel optical transmitter unit and a wavelength division multiplexing unit (11) connected to these parallel optical receiver /transmitter units, operation of said respective parallel optical receiver /transmitter units comprising the steps of:
a parallel optical reception step receiving a plurality of optical signals from said respective parallel optical transmitter units by a parallel optical reception module (13) to convert them reception electric signals;
a multiplexing step for multiplexing said reception electric signals from said parallel optical reception module (13), before generating multiplexed electric signals whose speed is higher than these reception electric signals by a multiplexing circuit (14); and
a high speed optical transmission step for converting said multiplexed electric signal from said multiplexing circuit (14) into a multiplexed optical signal to transmit by a high speed optical transmission module.

5. The optical transmission method of claim 4, wherein the optical transmission system further comprises an amplifier receiving multiplexed optical signal from said wavelength division multiplexing optical transmission equipment to amplify.

## Patentansprüche

1. Optisches Übertragungssystem, mit:
mehreren optischen Übertragungsvorrichtungen (1, 2, 3), die jeweils eine parallele optische Übertragungseinheit (4, 5, 6) zum parallelen Übertragen mehrerer optischer Niedriggeschwindigkeitssignale aufweisen; und
einer optischen Wellenlängenmultiplexübertragungsvorrichtung (7), die mehrere parallele optische Empfangs-/Übertragungseinheiten (8, 9, 10), die mit den parallelen optischen Übertragungseinheiten verbunden sind, und eine mit diesen parallelen optischen Empfangs-/Übertragungseinheiten (8, 9, 10) verbundene Wellenlängenmultiplexeinheit (11) aufweist;
wobei die parallelen optischen Empfangs-/Übertragungseinheiten (8, 9, 10) jeweils ein paralleles optisches Empfangsmodul (13) aufweisen, die mehrere optische Signale von den jeweiligen parallelen optischen Übertragungseinheiten (4, 5, 6) parallel empfangen, um sie in elektrische Empfangssignale umzuwandeln;
eine Multiplexschaltung (14) multiplext das elektrische Empfangssignal vom parallelen optischen Empfangsmodul, bevor ein elektrisches Multiplexsignal erzeugt wird, dessen Geschwindigkeit höher ist als diejenige der elektrischen Empfangssignale; und
ein optisches Hochgeschwindigkeitsübertragungsmodul (15) das das elektrische Multiplexsignal von der Multiplexschaltung (14) in ein optisches Multiplexsignal umwandelt, um es zu übertragen.

2. Das optische Übertragungssystem nach Anspruch 1, wobei
die parallele optische Übertragungseinheit (4, 5, 6) einer optischen Übertragungsvorrichtung (1) acht parallele optische Übertragungsmodule (12) zum parallelen Übertragen von acht optischen Signalen mit einer Rate von 1,25 Gbps aufweist; und
die optische Wellenlängenmultiplexübertragungsvorrichtung (7) acht parallele optische Empfangs-/Übertragungseinheiten (8) aufweist, die mit den parallelen optischen Übertragungsmodulen (12) verbunden sind;
die jeweiligen parallelen optischen Empfangs-/Übertragungseinheiten (8, 9, 10) das parallele optische Empfangsmodul (13) aufweisen, das acht optische Signale von den jeweiligen parallelen optischen Übertragungsmodulen (12) parallel empfängt, um sie in elektrische Empfangssignale umzuwandeln;
die Multiplexschaltung (14) das elektrische Empfangssignal vom parallelen optischen Empfangsmodul (12) multiplext, bevor ein elektrisches Multiplexsignal mit einer Rate von 10 Gbps erzeugt wird; und
das optische Hochgeschwindigkeitsübertragungsmodul (15) das elektrische Multiplexsignal von der Multiplexschaltung in ein optisches Multiplexsignal umwandelt, um es zu übertragen.

3. Das optische Übertragungssystem nach Anspruch 1 oder 2, ferner mit einem Verstärker, der ein optisches Multiplexsignal von der optischen Wellenlängenmultiplexübertragungsvorrichtung empfängt, um es zu verstärken.

4. Optisches Übertragungsverfahren, in dem ein optisches Übertragungssystem aufweist: mehrere optische Übertragungsvorrichtungen (1, 2, 3), die jeweils eine parallele optische Übertragungseinheit (4, 5, 6) zum parallelen Übertragen mehrerer optischer Niedriggeschwindigkeitssignale aufweisen, und eine optische Wellenlängenmultiplexübertragungsvorrichtung (7), die mehrere parallele optische Empfangs-/Übertragungseinheiten (8, 9, 10), die jeweils mit der parallelen optischen Übertragungseinheit verbunden sind, und eine mit diesen parallelen optischen Empfangs-/Übertragungseinheiten verbundenen Wellenlängenmultiplexeinheit (11) aufweist, wobei die Steuerung der jeweiligen parallelen optischen Empfangs-/Übertragungseinheiten die Schritte aufweist:
einen parallelen optischen Empfangsschritt zum Empfangen mehrerer optischer Signale von den jeweiligen parallelen optischen Übertragungseinheiten durch ein paralleles optisches Empfangsmodul (13), um sie in elektrische Empfangssignale umzuwandeln;
einen Multiplexschritt zum Multiplexen der elektrischen Empfangssignale vom parallelen optischen Empfangsmodul (13), bevor ein elektrisches Multiplexsignal zu erzeugt wird, dessen Geschwindigkeit höher ist als diejenige der elektrischen Empfangssignale, durch eine Multiplexschaltung (14); und
einen optischen Hochgeschwindigkeitsübertragungsschritt zum Umwandeln des elektrischen Multiplexsignals von der Multiplexschaltung (14) in ein optisches Multiplexsignal, um es durch das optische Hochgeschwindigkeitsübertragungsmodul zu übertragen.

5. Das optische Übertragungsverfahren nach Anspruch 4, wobei das optische Übertragungssystem ferner einen Verstärker aufweist, der ein optisches Multiplexsignal von der optischen Wellenlängenmultiplexübertragungsvorrichtung empfängt, um es zu verstärken.

## Revendications

1. Système de transmission optique comprenant :
une pluralité d'équipements de transmission optique (1, 2, 3) ayant chacun une unité de transmetteur optique en parallèle (4, 5, 6) pour transmettre une pluralité de signaux optiques de faible vitesse en parallèle ; et
un équipement de transmission optique à multiplexage par répartition en longueur d'onde (7) constitué d'une pluralité d'unités de récepteur/transmetteur optiques en parallèle (8, 9, 10), chacune connectée à ladite unité de transmetteur optique en parallèle, et une unité de multiplexage par répartition en longueur d'onde (11) connectée à ces unités de récepteur/transmetteur optiques en parallèle (8, 9, 10),
dans lequel lesdites unités de récepteur/ transmetteur optiques en parallèle (8, 9, 10) respectives comprennent un module de réception optique en parallèle (13) qui reçoit une pluralité de signaux optiques provenant desdites unités de transmetteur optique en parallèle (4, 5, 6) respectives en parallèle pour les convertir en signaux électriques de réception ; un circuit multiplexeur (14) multiplexe ledit signal électrique de réception provenant dudit module de réception optique en parallèle, avant de générer un signal électrique multiplexé dont la vitesse est supérieure à ces signaux électriques de réception ; et un module de transmission optique à haute vitesse (15) convertit ledit signal électrique multiplexé provenant dudit circuit multiplexeur (14) en un signal optique multiplexé, pour le transmettre.

2. Système de transmission optique selon la revendication 1, dans lequel l'unité de transmetteur optique en parallèle (4, 5, 6) d'un équipement de transmission optique (1) a huit modules de transmission optique en parallèle (12) pour transmettre huit signaux optiques de 1,25 Gbps en parallèle ; et
l'équipement de transmission optique à multiplexage par répartition en longueur d'onde (7) est constitué de huit unités de récepteur/transmetteur optiques en parallèle (8) connectées auxdits modules de transmission optique en parallèle (12),
dans lequel lesdites unités de récepteur/ transmetteur optiques en parallèle (8, 9, 10) respectives comprennent le module de réception optique en parallèle (13) qui reçoit huit signaux optiques provenant desdits modules de transmission optique en parallèle (12) respectifs en parallèle pour les convertir en signaux électriques de réception ; le circuit multiplexeur (14) multiplexe ledit signal électrique de réception provenant dudit module de réception optique en parallèle (12), avant de générer un signal électrique multiplexé de 10 Gbps ; et le module de transmission optique à haute vitesse (15) convertit ledit signal électrique multiplexé provenant dudit circuit multiplexeur en un signal optique multiplexé, pour le transmettre.

3. Système de transmission optique selon la revendication 1 ou 2, comprenant en outre :
un amplificateur qui reçoit un signal optique multiplexé, provenant dudit équipement de transmission optique à multiplexage par répartition en longueur d'onde, pour l'amplifier.

4. Procédé de transmission optique dans lequel un système de transmission optique comprend une pluralité d'équipements de transmission optique (1, 2, 3) ayant chacun une unité de transmetteur optique en parallèle (4, 5, 6) pour transmettre une pluralité de signaux optiques de faible vitesse en parallèle, et un équipement de transmission optique à multiplexage par répartition en longueur d'onde (7) constitué d'une pluralité d'unités de récepteur/transmetteur optiques en parallèle (8, 9, 10), chacune connectée à ladite unité de transmetteur optique en parallèle, et une unité de multiplexage par répartition en longueur d'onde (11) connectée à ces unités de récepteur/ transmetteur optiques en parallèle, l'opération desdites unités de récepteur/transmetteur optiques en parallèle respectives comprenant les étapes suivantes :
une étape de réception optique en parallèle pour recevoir une pluralité de signaux optiques provenant desdites unités de transmetteur optique en parallèle respectives par un module de réception optique en parallèle (13) pour les convertir en signaux électriques de réception ;
une étape de multiplexage pour multiplexer lesdits signaux électriques de réception provenant dudit module de réception optique en parallèle (13), avant de générer des signaux électriques multiplexés dont la vitesse est supérieure à ces signaux électriques de réception par un circuit multiplexeur (14) ; et
une étape de transmission optique à haute vitesse pour convertir ledit signal électrique multiplexé provenant dudit circuit multiplexeur (14) en un signal optique multiplexé, pour le transmettre par un module de transmission optique à haute vitesse.

5. Procédé de transmission optique selon la revendication 4, dans lequel le système de transmission optique comprend en outre un amplificateur recevant un signal optique multiplexé provenant dudit équipement de transmission optique à multiplexage par répartition en longueur d'onde, pour l'amplifier.
